# FASCICULE DE BREVET EUROPEEN

(11) **EP 0 568 407 B1**
(45) Date de publication et mention de la délivrance du brevet: **08.07.1998**
(21) Numéro de dépôt: 93400963.0
(22) Date de dépôt: 13.04.1993
(51) Int. Cl.: C22B 7/00, C22B 61/00

(54) **Procédé de récupération du rhénium usé**
Verfahren zur Rückgewinnung von verbrauchtem Rhenium
Process for reclaiming used Rhenium

(30) Priorité: 21.04.1992 FR 9204980
(43) Date de publication de la demande: 03.11.1993
(73) Titulaire: INSTITUT FRANCAIS DU PETROLE, 92502 Rueil-Malmaison (FR)
(72) Inventeur: Chauvin, Yves, F-78230 Le Pecq (FR); Commereuc, Dominique, F-92190 Meudon (FR); Saussine, Lucien, F-78290 Croissy sur Seine (FR)
(74) Mandataire: Andreeff, François

(56) Documents cités:
- DE-A- 1 942 191
- FR-A- 2 608 629
- US-A- 3 578 395
- DATABASE WPI Section Ch, Week 7428, Derwent Publications Ltd., London, GB; Class M25, AN 74-51088V & JP-A-74 028 081 (TAIYO KOKO KK) 13 Juin 1974
- DATABASE WPIL Section Ch, Week 8337, Derwent Publications Ltd., London, GB; Class A91, AN 83-763868 & SU-A-973 483 (KURBATOV) 15 Novembre 1982

## Description

La présente invention concerne un procédé de récupération du rhénium à partir de catalyseurs comprenant du rhénium, le plus souvent sous forme d'oxyde de rhénium, déposé sur un support poreux renfermant de l'alumine.

Les catalyseurs comprenant de l'oxyde de rhénium déposé sur un support (par des procédés connus de l'homme du métier pour inclure l'élément dans le support) sont utilisés en particulier pour réaliser la réaction de métathèse des hydrocarbures insaturés, par exemple la transformation d'un mélange d'éthylène et de butènes en propylène. De tels catalyseurs renferment en général de 0,01 à 20 % en poids de rhénium, le support étant constitué par de l'alumine ou un mélange d'au moins 20 % en poids d'alumine avec un autre oxyde.

Ces catalyseurs se désactivent progressivement avec le temps de contact avec les charges hydrocarbonées, cette désactivation pouvant être attribuée, entre autre, aux impuretés présentes dans ces charges. Ces catalyseurs doivent donc être périodiquement régénérés, par exemple par chauffage à température élevée dans un gaz contenant de l'oxygène. En général, l'activité des catalyseurs est totalement, ou presque, restaurée après cette opération.

Cependant, lorsque ces catalyseurs ont subi un grand nombre de régénérations, il devient de plus en plus difficile de ramener l'activité au niveau de celle d'un catalyseur fraîchement préparé, et il est alors nécessaire de renouveler le catalyseur.

En raison du prix du rhénium, il est indispensable de traiter le catalyseur désactivé pour récupérer au maximum le rhénium qu'il contient.

Il existe de nombreuses méthodes décrites dans la littérature qui permettent la récupération du rhénium, par exemple par dissolution de l'ensemble rhénium-support, puis extraction du rhénium sous forme de sulfure. Ces méthodes comprennent en général plusieurs étapes, nécessaires pour d'abord extraire et séparer le rhénium des autres éléments du catalyseur, puis ensuite pour transformer le rhénium extrait en un composé apte à la préparation d'une nouvelle charge de catalyseur frais. Le brevet US-3578395 décrit un procédé de récupération du rhénium contenu dans des catalyseurs, procédé dans lequel le catalyseur est chauffé en atmosphère oxydante à des températures comprises entre 150 °C et 760 °C de façon à porter le rhénium à un niveau d'oxydation élevé (en général, du rhénium heptavalent est obtenu). Après cette calcination, le catalyseur est mis au contact d'une solution ionique de pH compris entre 2 et 12, de concentration au moins égale à 0,05 mole anion/l, pendant un temps suffisant pour extraire des quantités significatives de rhénium sans dissoudre le support de catalyseur.

La présente invention décrit un procédé amélioré de récupération simple dans lequel le rhénium est extrait avec un rendement remarquable d'un catalyseur usé et de préférence sous forme d'un composé directement utilisable pour la préparation d'une nouvelle charge de catalyseur frais.

Dans ce procédé de traitement, il est important que dans le catalyseur usé, le rhénium soit d'abord amené à son état d'oxydation le plus élevé, par exemple à l'état d'heptoxyde de rhénium.

D'après la littérature existante (brevet US-3578395), ceci peut être réalisé, dans une première étape, en chauffant le catalyseur à température élevée dans un courant gazeux contenant de l'oxygène, à pression atmosphérique. La température peut être de 450 °C à 700 °C, de préférence de 500 à 600 °C. Le gaz peut être de l'oxygène pur, mais on préfère utiliser un mélange d'oxygène dilué avec un gaz inerte, par exemple de l'air. La durée du traitement peut varier de 15 minutes à 10 heures, de préférence de 1 heure à 5 heures. Au cours de ce traitement, les résidus hydrocarbonés qui se sont éventuellement accumulés sur le catalyseur sont brûlés et éliminés sous forme de dioxyde de carbone et d'eau, ce qui facilite la récupération ultérieure du rhénium.

Il a maintenant été trouvé de façon surprenante que le taux de récupération du rhénium peut être très nettement amélioré si le catalyseur est ensuite traité, dans une deuxième étape, par un oxydant en solution aqueuse diluée qui est l'eau oxygénée, et dans une troisième étape par une solution basique aqueuse pour extraire le rhénium.

Dans cette deuxième étape, le catalyseur est mis en contact avec un excès, par rapport à son volume poreux, d'une solution aqueuse d'eau oxygénée, d'abord à température ambiante. La température est ensuite progressivement élevée jusqu'à l'ébullition. La durée de ce traitement peut varier de 15 minutes à 10 heures, de préférence de 1 heure à 5 heures. La concentration de la solution d'eau oxygénée peut varier de 0,5 % à 30 % en volume, de préférence de 1 % à 15 %. Après refroidissement, la solution aqueuse est séparée par tout moyen convenable, par exemple par filtration.

Dans la troisième étape, le catalyseur est soumis à une extraction par une solution aqueuse concentrée d'une base telle que par exemple la soude, la potasse ou l'ammoniaque. De préférence, on opère avec des solutions présentant un pH supérieur à 12, ce qui représente par exemple pour l'ammoniaque au moins 10 % en poids de NH₃. La température d'extraction peut varier de la température ambiante à 100 °C, de préférence de la température ambiante à 70 °C. Le temps de contact peut être de 15 minutes à 10 heures, de préférence de 1 heure à 5 heures. Cette opération peut éventuellement être effectuée dans un autoclave sous pression. De préférence, une solution aqueuse d'ammoniaque est employée car le rhénium est alors extrait sous forme d'une solution aqueuse de perrhénate d'ammonium, qui peut être aisément séparée du support, par exemple par filtration ou par décantation.

Cette solution d'extraction est réutilisable telle quelle, après éventuellement une évaporation partielle pour ajuster son volume, pour la préparation d'un nouveau lot de catalyseur. Les faibles quantités d'aluminium qui peuvent passer en solution au cours de l'extraction ne sont pas nocives dans la fabrication du catalyseur neuf.

L'ensemble des trois étapes ci-dessus, ou l'une seulement de ces étapes, peut être répétée plusieurs fois pour améliorer le taux d'extraction.

Les exemples suivants illustrent l'invention sans en limiter la portée.

### EXEMPLE 1

10 g d'un catalyseur renfermant 7,93 % en poids de rhénium métal déposé sur une alumine-g ayant une surface spécifique de 160 m²/g, et ayant été utilisé pour effectuer la métathèse d'un mélange d'éthylène et de butène-2, sont placés dans un tube en quartz qui est introduit dans un four électrique. Le tube est balayé par un courant d'air avec un débit de 20 l TPN par heure. La température est portée à 550 °C pendant 2 heures, puis le catalyseur est refroidi à température ambiante.

Il est alors versé dans un ballon muni d'un réfrigérant et contenant 50 ml d'eau oxygénée à 5 % en volume. Après avoir agité le mélange pendant 30 minutes à température ambiante, celui-ci est porté à reflux pendant encore 30 minutes. L'ensemble de ce traitement a duré 80 minutes.

Après filtration, on introduit sur le catalyseur 100 ml d'une solution aqueuse d'ammoniaque à 20 % en poids de NH₃. Le mélange est porté à 50 °C et agité pendant 2 heures. La solution est séparée par décantation, et le catalyseur est séché à l'étuve à 120 °C pendant une nuit.

L'analyse du rhénium sur le catalyseur extrait donne une teneur de 0,37 % en poids en rhénium métal (après correction pour la perte de poids à 800 °C).

Le taux de récupération du rhénium est de 95 %.

La solution ammoniacale est directement utilisable pour la préparation d'un nouveau lot de catalyseur.

### EXEMPLE 2 (comparatif)

On a traité le même catalyseur que dans l'exemple 1 dans les mêmes conditions, à ceci près qu'on a omis la deuxième étape de traitement par l'eau oxygénée.

L'analyse du rhénium sur le catalyseur extrait correspond à un taux de récupération de 87 %.

Cet exemple montre que le traitement par l'eau oxygénée améliore nettement la récupération du rhénium (+8 % récupérés) ce qui permet une économie significative.

### EXEMPLE 3 (comparatif)

On a traité le même catalyseur que dans l'exemple 1 dans les mêmes conditions, à ceci près qu'on a omis la deuxième étape du traitement par l'eau oxygénée, et que la solution aqueuse d'ammoniaque dans la troisième étape avait une concentration de 2 % en poids de NH₃ seulement.

L'analyse du rhénium sur le catalyseur extrait correspond à un taux de récupération de 80 %.

Cet exemple montre l'intérêt d'effectuer un traitement complémentaire par l'eau oxygénée, et d'utiliser une solution concentrée d'ammoniaque à pH supérieur à 12.

## Revendications

1. Procédé de récupération de rhénium à partir de catalyseurs comprenant du rhénium déposé sur un support poreux renfermant de l'alumine, dans lequel le catalyseur est d'abord chauffé dans une atmosphère oxydante pour amener le rhénium à son état d'oxydation le plus élevé, ledit procédé étant caractérisé en ce que le catalyseur est ensuite traité avec une solution aqueuse d'eau oxygénée, puis une solution basique aqueuse pour extraire le rhénium.

2. Procédé selon la revendication 1, caractérisé en ce que la solution aqueuse d'eau oxygénée a une concentration de 0,5 % à 30 % en volume.

3. Procédé selon l'une des revendications précédentes, caractérisé en ce que la solution aqueuse basique est choisie dans le groupe constitué par la soude, la potasse, l'ammoniaque.

4. Procédé selon l'une des revendications précédentes, caractérisé en ce que la solution aqueuse basique est l'ammoniaque.

5. Procédé selon l'une des revendications précédentes, caractérisé en ce que la solution basique aqueuse présente un pH > 12.

6. Procédé selon l'une des revendications précédentes, caractérisé en ce que le support poreux contient au moins 20 % en poids d'alumine.

## Patentansprüche

1. Verfahren zur Rückgewinnung von Rhenium aus Katalysatoren, welche Rhenium umfassen, das auf einem porösen Aluminiumoxid aufweisenden Träger abgeschieden ist, bei dem der Katalysator zunächst in einer oxidierenden Atmosphäre erwärmt wird, um das Rhenium in seinen höchsten Oxidationszustand zu überführen, wobei das Verfahren sich dadurch auszeichnet, daß der Katalysator anschließend mit einer wässrigen Lösung von Wasserstoff(su)peroxid, dann mit einer basischen wässrigen Lösung zum Extrahieren des Rheniums behandelt wird.

2. Verfahren nach Anspruch 1, dadurch gekennzeichnet, daß die wässrige Lösung von Wasserstoff(su)peroxid eine Konstellation von 0,5 bis 30 Volumen% hat.

3. Verfahren nach einem der vorhergehenden Ansprüche, dadurch gekennzeichnet, daß die wässrige basische Lösung gewählt ist aus der Gruppe, die gebildet ist durch Soda bzw. Natrium-Karbonat, Kalium-Karbonat und Ammoniak.

4. Verfahren nach einem der vorhergehenden Ansprüche, dadurch gekennzeichnet, daß die wässrige basische Lösung Ammoniak ist.

5. Verfahren nach einem der vorhergehenden Ansprüche, dadurch gekennzeichnet, daß die wässrige basische Lösung einen PH-Wert > 12 aufweist.

6. Verfahren nach einem der vorhergehenden Ansprüche, dadurch gekennzeichnet, daß der poröse Träger wenigstens 20 Gew.-% Aluminiumoxid enthält.

## Claims

1. Process for the recovery of rhenium from catalysts incorporating rhenium deposited on a porous support containing alumina, in which the catalyst is firstly heated in an oxidizing atmosphere, for bringing rhenium to its highest oxidation state said process being characterized in that the catalyst is then treated with an aqueous hydrogen peroxide solution and then with a basic aqueous solution for extracting rhenium.

2. Process according to claim I, characterized in that the aqueous hydrogen peroxide solution has a concentration of 0.5 to 30 vol. %.

3. Process according to either of the preceding claims, characterized in that the basic aqueous solution is chosen from within the group constituted by soda, potash and ammonia.

4. Process according to any one of the preceding claims, characterized in that the basic aqueous solution is ammonia.

5. Process according to any one of the preceding claims, characterized in that the basic aqueous solution has a pH >12.

6. Process according to any one of the preceding claims, characterized in that the porous support contains at least 20% by weight alumina.
